(19) **Europäisches Patentamt**

**European Patent Office**

**Office européen des brevets**

(11) **EP 1 081 591 A2**

(12) **EUROPEAN PATENT APPLICATION**

(43) Date of publication:
07.03.2001 Bulletin 2001/10

(51) Int. Cl.[7]: **G06F 7/58**

(21) Application number: **00114754.5**

(22) Date of filing: **10.07.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **01.09.1999 EP 99810782**

(71) Applicant:
**International Business Machines Corporation Armonk, NY 10504 (US)**

(72) Inventors:
• **Buhler, Peter**
  **8803 Rueschlikon (CH)**
• **Eirich, Thomas**
  **8804 Au (CH)**

(74) Representative:
**Klett, Peter Michael**
**International Business Machines Corporation,**
**Säumerstrasse 4**
**8803 Rüschlikon (CH)**

(54) **Random number generator**

(57) A method for generating a random number is proposed for a system comprising a system clock, a counter and a processing unit for performing actions. First a work action is repeated several times within a predetermined time interval. The number of repetitions of said work action is counted. The repetition number is mapped to a fixed range returning an actual sample value. The returned actual sample value is concatenated with a previous such sample value to form a sample sequence whose amount of information is then assessed. These steps are repeated until the assessment results in that the contained amount of information is greater or equal a predetermined amount target number. Then the sample is compressed into a bit sequence with a length smaller or equal the amount target number.

Fig. 1

**EP 1 081 591 A2**

Printed by Xerox (UK) Business Services
2.16.7 (HRS)/3.6

**Description**

The invention relates to a method for generating a random number and to a random-number generator.

TECHNICAL FIELD AND BACKGROUND OF THE INVENTION

Random values play a key role in secure communication protocols. Such protocols are often designed in a way that an adversary must guess random values to break security. Unpredictable random values are hence essential for the security of those protocols. A prominent example of such a protocol is SSL/TLS (prior art citation). Random-number generators are divided into two categories: *pseudo-random-number generators* (PRNGs) and *true-random-number generators* (TRNGs).

PRNGs: After initial seeding, a PRNG produces a sequence of random values. The sequence is deterministic since defined by some algorithm and it is predictable if the seeding is known. Pseudo-random algorithms maintain some secret internal state to generate the random output. The initial secret state is created based on the initial seed. PRNG algorithms often employ cryptographic techniques to protect their internal secret state from being inferred through analysis of the random output. Nevertheless, PRNGs alone cannot solve the security problem of unpredictable random data for security protocols as outlined above since unpredictability comes from an unpredictable seed. The importance of random-number generation can be seen from Part I, chapter 2.8 (p.44ff) in "Applied Cryptography" by Bruce Schneier, 2nd edition, 1996, JohnWiley & Sons, Inc.. A real random sequence generator is described in the same book in chapter 17.14 ( p. 421ff)

TRNGs: A TRNG outputs a sequence of random values whereby the previously generated values are independent of the ones that will be generated. TRNGs are relatively easy to build in hardware and more difficult in software. The usual approach for software-based TRNGs is to record "quite random events" generated in the hardware of some system. These events are mixed and massaged before being returned to some application as random data. As with PRNGs, cryptographic techniques are used to massage the assembled random events. Often one-way hash functions are used to compress the raw event data and to produce an output with good statistical properties.

Typical sources for quite-random events are disk-access times, timing of certain interrupts, keyboard- and mouse events etc. In general, one can say that a software-based TRNG is the easier to implement the closer it is to hardware. This means it needs access to hardware and I/O systems and must be well integrated into an operating system. Usually, the generation of true-random data by a TRNG scheme is a time-consuming process compared to a PRNG algorithm. Therefore, a TRNG is often used to seed a PRNG and the output of the PRNG is then used by applications.

Only some of today's operating systems provide support for true-random-number generation; one of them is Linux. (prior art citation) Generally, a platform-independent application, e.g. a Java application or an applet, cannot expect this functionality to be provided by the operating system in any of its execution environments.

OBJECT AND ADVANTAGES OF THE INVENTION

It is an object of the invention according to claim 1 to provide a true-random-number generating method which is platform-indpendent. It is another object to provide a true-random-number generating method which delivers a random number whose randomness depends on pure data-processing activities in a system. It is another object to provide a true-random-number generating method which delivers a random number whose randomness increases with system activity. It is another object to provide a true-random-number generating method which delivers a random number whose randomness is controlled, particularly until a predetermined randomness value is achieved. It is an object of the invention according to claim 13 to provide a random-number generator which has the same advantages as the above mentioned true-random-number generating method. It is an object of the invention according to claim 11 to provide said method encoded an a machine-readable medium. It is an object of the invention according to claim 12 to provide a machine-readable medium comprising in encoded form a program for performing the method according to one of claims 1 to 10.

The proposed software-based TRNG is designed to run as an application on top of an operating system with only minimal functional requirements to the underlying system. It needs not be implemented close to hardware but can be placed in a process running on top of an operating system. It only has minimal requirements to the underlying operating system and adapts to the entropy inherently available in the hardware and exposed by the operating-system behavior.

Because the only feature required from the underlying operating system is a function that returns a system time, e.g. the current time of day, the invented method works on a wide range of different hardware platforms and operating systems. The algorithm adapts to the system and exploits the entropy available in the system. If there is no entropy in the system, the algorithm will theoretically run forever since there are no random events to be evaluated. In a real system however such a case will never occur. If a system has many active input sources (keyboard, mouse, or network) the algorithm will produce random information faster than on a machine with very limited system activity. This adaptation process is simple and fast. If an application requests random information, the delivery of the data is prompt and is not delayed by lengthy evaluation processes. Memory consumption of the algorithm is very small, enabling easy integration into applications for low-end systems.e.g. PDAs or phones. The processor is used while randomness is collected and data generated but the random number generation process may be freely shared with other tasks.

When the step of concatenating the returned actual sample value with a previous such sample value to form a sample sequence, and or the step of assessing the amount of information contained in this sample sequence has a runtime that is small in comparison with the time interval or even runtime is constant, the potential of pseudo-entropy is reduced and the measured entropy is more closely to the real entropy. This leads to less necessary bitlength security margin and to a better randomness. It is of advantage when the number v of repetitions is a big number in order to ensure a greater randomness distribution.

The work action need not be a single action but can as well consist of several actions, be it different or identical actions. When after each execution of the work action the system clock time is read in order to determine whether the time interval has elapsed, the precision in determining the number of repetitions is increased which leads to less imprecision in counting and hence to a preciser repetition number which in turn increases the precision in determining the sample distribution and the inherent entropy thereof.

The simplest way of running the proposed method is when the work action is an action where nothing is done. This provides the minimum sytsm load with perfoming the herein proposed method.

When the work action is an action that affects the system workload with an at least partially random work time, the system workload introduced by the random-number-generating method is randomly distributed and does not create system workload peaks that affect the overall system performance. The proposed method is intended to affect system performance only negligibly.

When of the counted repetition number only a limited number, preferably 2, 4, or 8, of least-significant bits is used as the sample value s, this represents a very simple method of mapping the repetition number to a fixed range.

It is of advantage when the amount of information contained in the sample sequence is assessed by applying the Shannon function to the probability values of the sample values, because this method is acknowledged to result in an entropy value that is representative for the randomness of the sample value and hence its usefulness for processes that rely on the random number such as cryptographical algorithms.

If, for compressing the sample sequence into a shorter bit sequence, the sample sequence is taken as a single binary number, and a modulo number is selected, whereby $M \geq 2^1$, and the compressed bit sequence is obtained by taking the least 1 bits of $N^2$ mod M, then the sample sequence is transformed into a bit sequence with an optional security margin, namely when l<L, e.g. for eliminating eventual pseudo-entropy, and additionally a mixing of bits is effected. If M is a prime number the mixing is particularly good. The goal is to avoid loss of entropy while compressing.

Using as the modulo number a prime number, preferably the smallest possible prime number, provides advantageous since thereby a good mixing is achieved, in that dependencies which otherwise would reduce the entropy are avoided or at least reduced.

## SUMMARY OF THE INVENTION

The invention concerns a random-number-generating method which exploits the randomness of actions or tasks performed in a system with a processing unit which processes all these actions or tasks. By having a system that performs a variety of such tasks on a timescale in which a substantially high number of actions is to be performed in a relatively short time, the probability that a specific, predetermined work action is executed at different points in time with the same execution speed is very low. This means that by measuring the execution time one has a first basis for generating a random number. The more tasks and the more randomly distributed the start times and execution times of these tasks are, the higher is the randomness of the execution time of the work action. By having the work action not only being executed once, but even several times, ideally a relatively high number of times, this randomness adds up and thereby increases. The work action may be hence an action that is to be performed several times while the number of executions during a predetermined time period is counted,. It may as well be a low-priority task that is interrupted by the other tasks. Also a combination is possible. A very easy-to-implement work action is to do effectively nothing but to watch the system clock. Since this watching is a task to be performed by the processing unit, this watching task is also interfered with by the other tasks. The number of times, at which the counter reading can be assessed, is then a random number. The higher the number of action repetitions during the time period, the higher in principle the randomness, since the number of different interfering tasks is expected to be higher. Particularly suited as interfering tasks are those being related to network activities, since network activities occur relatively unpredeterminedly and in a sufficiently high number. The counter reading after elapsing of the time period, also referred to as time interval, is then the basis for generating a random number with a high randomness. Due to the fact that the randomness of the assessed counter reading is not obligatorily high, the counter reading's randomness is, after a mapping step into a fixed number range, evaluated. Dependent on the result thereof, the process of producing counter readings is continued until their concatenated sample sequence shows a sufficiently high randomness, expressed in form of an entropy value. Since the bitlength of the sample sequence in the end is longer than necessary for representing the contained entropy, a compression step follows which reduces the bitlength to the adequate length or even shorter. Hence, the proposed method represents a way of using the pure system activity without referring to attached hardware devices, for generating a random number.

DESCRIPTION OF THE DRAWINGS

Examples of the invention are depicted in the drawings and described in detail below by way of example. It is shown in

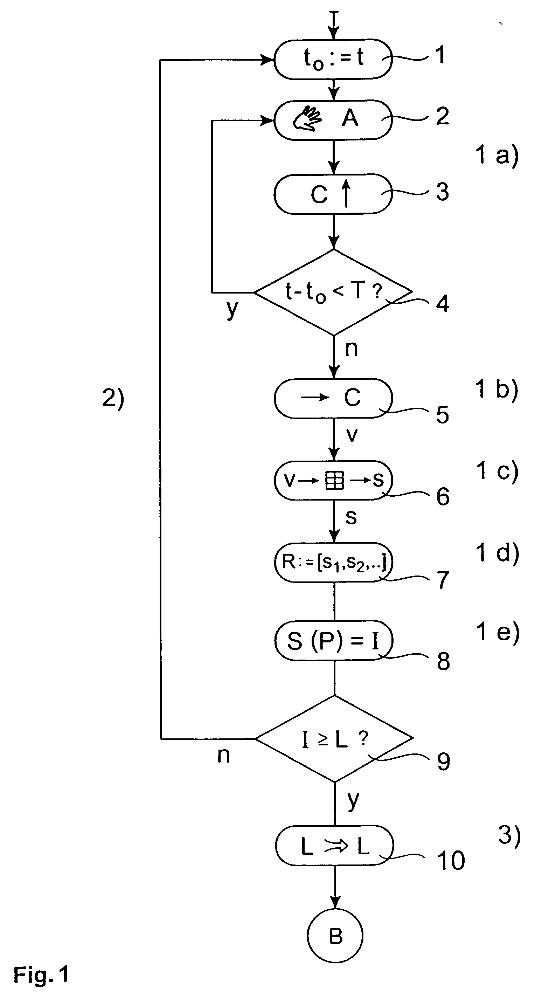

Fig. 1 a flowchart of the method according to the invention

All the figures are for sake of clarity not shown in real dimensions, nor are the relations between the dimensions shown in a realistic scale.

DETAILED DESCRIPTION OF THE INVENTION

In the following, the various exemplary embodiments of the invention are described.

In figure 1, the scheme listing the steps of the method according to the invention is depicted. The method is performed in a system which comprises a processing unit and a counter. The processing unit is intended to perform different actions. Typically a computer environment is suitable for this task, the actions being e.g. disk drive accesses, memory accesses, interrupts, calculating tasks etcetera.

In a basic loop, denoted with 1a, a work action A is repeated within a specified amount of time, namely a time interval T. A start time value $t_0$ is therefor in a first step 1 set to t and the work action A is performed once in a second step 2. In a third step 3 the system counter C is incremented. In a fourth step 4, it is tested whether the actual system time t minus the start time value $t_0$ has exceeded the time interval T. In the case the time interval T has not yet elapsed, the second step 2 is initiated again thereby closing the basic loop 1a. The basic loop 1a is hence run through again and again, until the time interval T has been exceeded. Then the basic loop 1a is left. The system counter C shows at that point in time, how often the work action A has been executed during the time interval T. The work action A can consist of serveral individual actions.

In a fifth step 5 the counter-reading is taken as a number v of repetitions. It is basically this number v which carries the randomness in it. Since in any system the work action A is not the only action to be performed, the basic-loop execution will be interrupted for the time during which the system has other actions to perform. This interrupt time depends on the type of action. The action may be a disk operation, a storage operation, a network operation or an internal interrupt etc.. The work action A is hence an action which does not have highest execution priority, but a priority somewhat lower. It can, but need not, be a task of lowest priority. The higher the priority, the less often the work action execution is suppressed by some other task. The priority may be set at a value which guarantees that the work action execution is suppressed often enough to get sufficient randomness into the counting of repetitions, but which also guarantees that the work action A is executed often enough that it can have sufficiently different repetition numbers under various system workloads and in an acceptable amount of time. The randomness of such operations is very high and it is the higher, the more such actions are to be performed. It becomes also apparent that the randomness is not constant but is dependent on the system activity. This property in principle makes the repetition number v at first a random number with not a very high randomness. However, with the next steps it will be ensured that the repetition number v is transformed in order to generate a true-random number with a very high randomness.

In a sixth step 6 the repetition number v is mapped into a reduced, limited number range. This mapping transforms the repetition number v into a sample value s, i.e. $s = G(v)$ where v is the actual number of repetitions of the work action A and G is a mapping function. Exemplarily, a simple lookup table can be used for this mapping.

The therefrom resulting sample value s is then taken as a sample sequence R in that it is concatenated in a seventh step 7 with foregoing sample values s, i.e. $R := [s_1, s_2, s_3, ...]$ , $s_1$ being the very first sample value s, $s_2$ being the second and so forth. In the case of the sample value s being the very first sample value $s_1$, it is hence concatenated with no other sample value s and hence constitutes the sample sequence R as a whole.

The sample sequence R is in an eighth step 8 tested for its entropy. Therefor the Shannon function $S(P) = I$ is used. In the following, n denotes the total number of counted sample values $s_i$., with $i \in \{1...n\}$. For each sample value $s_i$ a symbol $q_i$ denotes how often this sample value $s_i$ occurs in the sample sequence R. The amount of information I is computed according to Shannon's information theoretical definition: $I = S(P) = - p_1 * \log(p_1) - ... - p_n * \log(p_n)$ , where $p_i = q_i/n$ and $p_i * \log(p_i) = 0$ if $p_i = 0$. This entropy evaluation process assumes that $P_i$, which is the relative likelihood of the sample value $s_i$ in the sample sequence R is valid not only while the sample sequence R has been recorded. The set of sample values $s_i$ appearing in the sample sequence R at all, and the likelihood of these sample values $s_i$ is dependent on the underlying system and its current state of operation. The evaluation function E(R)=S(P) maps the sample values $s_i$ to the number of bits needed to represent the amount of information I in a binary form.

As next step follows in a ninth step 9 a comparison between the assessed amount of information I and a predetermined number L, which represents the desired amount of information. This number may be freely chosen and one will typically choose a number that is easily usable for a subsequent compression step. Since there exist standard compression and hashing algorithms which require as input a number with a specified minimum bitlength, the number L can be set to at least that length in order to be usable as input for standard compression and/or hasing methods.

As long as the evaluated amount of information I is smaller than the target value, i.e. the predetermined number L, i.e. E(R) < L, the procedure is continued in that the process is started again from the beginning, i.e. the first step 1 is again initiated and afterwards the basic loop 1a is executed again. This represents the entropy loop, denoted in the figure with 2). Otherwise a tenth step 10 is initiated. The sample sequence R is hence lengthened until its entropy has reached the target value L. Then the entropy loop 2) is left. If the required entropy has been achieved, i.e. E(R) ≥L, then the set of recorded sample values, the sample sequence R, is compressed in the tenth step 10 down to a length of l ≤ L bits, resulting in a final bit sequence B. This compression can be performed using a compression function C. The compression below the target value L is not mandatory, since theoretically the information entropy of the final bit sequence B with the length of L bits is L. To compensate for eventual inevitable pseudo-entropy appearing during the process, the compression to a level lower than the target value L provides a safety margin. Such pseudo entropy is defined as entropy which is measured by the Shannon function as being present, but which in fact is not real entropy.

Typically the random-number-generator parameters will be determined, in that first, the required length l of the final bit sequence B is determined, then the safety margin is calculated or estimated in order to arrive at the required target value L.

For the description of the effects which may appear during the random-number generation process, it is assumed that the system executes deterministically and there are no interrupting events.

(a) Drift

It is unlikely that the time spent for one iteration of the loop repeating the work action A and counting the number v of repetitions divides exactly the time interval T. This means that there is a drift between the system clock ticks and the exact time when the system clock is queried. In the case the system would behave deterministically, the resulting sample sequence R may consist of two sample values v and v+ 1, although only one should occur. The changes happen because the drift adds up over a sequence of several loop executions and makes the loop 1a detect the change in the clock one iteration earlier or later. Therefore the algorithm should not consider a pair of iteration counters differing by only one as actually being different.

(b) Self-created entropy

For best performance. i.e. the minimum pseudo-entropy, respectively constant start conditions of the loop 1a), the fifth step 5, sixth step 6, seventh step 7, eighth step 8, and ninth step 9 should have constant runtime. Otherwise these steps 5, 6, 7, 8, 9 will consume a varying amount of time and the loop 1a comprising the second, third, and fourth step 2, 3, 4 will follow with a varying iteration count. The pattern created by this variation is more easily predictable since is not caused by random events in the system.

If the seventh step 7 and eighth step 8 cannot be implemented having data-independent execution time, then the time difference between possible execution paths through the process should at least be small compared to the time interval T. This creates a very small drift whose effect on the sampled sample sequences R is then negligible. If the described two effects above are not eliminated by the above described measures, then the evaluation function E would recognise entropy although there is none. Hence, the better the two effects are avoided, the more reliable is the random.number generation method and the better is the randomness of the obtained random number and the lower is the need for an eventual safety margin, i.e. L-l, for coping with the induced self-entropy.

As an example, the following settings can be used: The settings as described below work especially well for systems with one of the operating systems Windows 95, Windows 98, Windows NT, and all kinds of Unix Systems (Linux, AIX, etc.). The time interval T is set to one millisecond. The target value is set to L:=96 and the length 1 to 1:=64. This means that 96 bits of information are collected and compressed to only 64 bits. The difference gives the mentioned additional security. 64 bits is chosen to be the biggest integer quantity that can be handled on today's prevailing micro-processors. As the work action A simply a void action is chosen, i.e. nothing is done. Hence, in the basic loop 1a, it is actually counted how often the time of day can be queried and the system counter can be incremented. The mapping function G is realized in that the least 4 significant bits of the counter value are taken as the sample values s. Mapping the number v of repetitions to only 16 different values makes the state management of the algorithm very simple and only has a small effect on performance by eliminating some additional information contained in the repetition numbers v. Two sample values s can be easily combined into a byte which makes processing easier.

As the compression function C the following method is used: When N is the integer number whose binary representation matches the concatenation of all samples in the sample sequence R, and M is the smallest prime bigger than $2^1$, then C is chosen to be the least 1 bits of $N^2 \bmod M$. The information contained in the sample sequence R is thereby compressed into 64 bits and the information is also mixed so that the resulting output has good statistical properties.

The present invention can be realized in hardware, software, or a combination of hardware and software. The random-number generating method, or random-number generator according to the present invention can be realized in a centralized fashion in one computer system, or in a distributed fashion where different elements are spread across several interconnected computer systems. Any kind of computer system or other apparatus adapted for carrying out the methods described herein is suited. A typical combination of hardware and software could be a general purpose computer system with a computer program that, when being loaded and executed, controls the computer system such that it carries out the methods described herein. The present invention can also be embedded in a computer program product, which comprises all the features enabling the implementation of the methods described herein, and which - when loaded in a computer system - is able to carry out these methods. This product need not be encoded and stored on a medium, but can also be present and distributable in a medialess form, i.e. as pure code, e.g. downloadable via a data network. In that sense the invention comprises a computer program. element comprising a computer program code means to make the computer execute the method according to claims 1 to 11, but also a computer program product comprising a computer-readable medium having thereon computer program code means , which, when the program is loaded into a computer makes the computer execute this method.

A computer program or computer program means in the present context mean any expression, in any language, code or notation, of a set of instructions intended to cause a device having an information processing capability to perform a particular function either directly or after either or both of the following a) conversion to another language, code or notation; b) reproduction in a different material form.

The invention can also be realized in form of a data-processing system which includes an operating system and which comprises the means mentioned in claim 13.

## Claims

1. Method for generating a random number in a system comprising a system clock, a counter and a processing unit for performing actions, said method comprising the steps:

   1a) repeating a work action A several times within a predetermined time interval T,
   1b) counting the number v of repetitions of said work action A,
   1c) mapping the repetition number v to a fixed range returning an actual sample value s,
   1d) concatenating the returned actual sample value s with a previous such sample value s to form a sample sequence R,
   1e) assessing the amount of information I contained in said sample sequence R,
   2) repeating the steps 1a) to 1e) until the assessment in step 1e) results in that the contained amount of information I is greater or equal a predetermined amount target number L,
   3) compressing said sample sequence R into a bit sequence B with a length $l \leq L$.

2. Method for generating a random number according to claim 1, wherein the step 1b) and/or 1c) and/or 1d) and/or 1e) has a runtime that is small in comparison with the time interval T.

3. Method for generating a random number according to claim 1 or 2, wherein the step 1d) and/or 1e) has a constant runtime.

4. Method for generating a random number according to one of claims 1 to 3, wherein after each execution of the work action A the system clock time t is read in order to determine whether the time interval T has elapsed.

5. Method for generating a random number according to one of claims 1 to 4, wherein the work action A is an action where nothing is done.

6. Method for generating a random number according to one of claims 1 to 5, wherein the work action A is an action that affects the system workload with an at least partially random work time.

7. Method for generating a random number according to one of claims 1 to 6, wherein the step 1c) is performed in that of the counted repetition number v only a limited number, preferably 2, 4, or 8, of least-significant bits is used as the sample value s.

8. Method for generating a random number according to one of claims 1 to 7, wherein the amount of information I contained in said sample sequence R is assessed by applying the Shannon function S to the probability values p of the sample values s.

9. Method for generating a random number according to one of claims 1 to 8, wherein for performing the step 3), the sample sequence R is taken as one total binary number N and a modulo number M, whereby $M \geq 2^1$, is selected and the compressed bit sequence B is obtained by taking the least 1 bits of the binary number $(N^2)$ mod M.

10. Method for generating a random number according to one of claims 1 to 9, wherein the modulo number M is a prime number, preferably the smallest possible prime number.

11. Method according to one of claims 1 to 10, being encoded on a machine-readable medium.

12. Machine-readable medium comprising in encoded form a program for performing the method according to one of claims 1 to 10.

13. Random number generator comprising:

   1a) a processing unit for performing actions and for repeating a work action A several times within a predetermined time interval T,
   1b) a counter for counting the number v of repetitions of said work action A,
   1c) means for mapping the repetition number v to a fixed range, returning an actual sample value s,
   1d) means for concatenating the returned actual sample value s with a previous such sample value s to form a sample sequence R,
   1e) means for assessing the amount of information I contained in said sample sequence R,
   2) whereby in said processing unit the steps 1a) to 1e) are repeatable until the assessment in step 1e) results in that the contained amount of information I is greater or equal a predetermined amount target number L
   3) means for compressing said sample sequence S into a bit sequence B with a length $1 \leq L$.

14. Random number generator according to claim 13, with a system clock whose time t after each execution of the work action A is readable in order to determine whether the time interval T has elapsed.

15. Random number generator according to claim 13 or 14, wherein the work action A is an action where nothing is done.

16. Random number generator according to one of claims 13 to 15, wherein the work action A is an action that effects the system workload with an at least partially random work time.

**Fig. 1**